# EUROPEAN PATENT APPLICATION

(11) **EP 0 898 440 A2**
(43) Date of publication of application: **24.02.1999**
(21) Application number: 98115513.8
(22) Date of filing: 18.08.1998
(51) Int. Cl.: H04Q 11/00

(54) **Optical switch module**

(30) Priority: 21.08.1997 US 915675; 14.01.1998 US 6891
(71) Applicant: JDS FITEL INC., Nepean, Ontario K2G 5W8 (CA)
(72) Inventor: MacDonald, Robert I., Manotick, Ontario (CA)
(74) Representative: Frei, Alexandra Sarah

(57) **Abstract**

A system of interconnected functionally identical modules for switching P optical signals to P locations in a non-blocking manner is disclosed. Each of the functionally identical modules provides a same function, which may or may not be provided in an identical manner. Each module has several of first ports and several second ports optically coupled to second ports of other modules. Switching means are provided for switching means for switching between the first ports and the second ports. Each module has at least a second port directly coupled to another second port. Providing a system wherein modules are identical provides numerous advantages. The architecture further provides the advantage of ease of repair within no disturbance to communications being handled by other modules.

## Description

### Field of the Invention

This invention relates to optical switching devices and more particularly, to a module for use in a non-blocking optical system.

### Background of the Invention

Various forms of optical switches are known, such as U.S. patent 4,580,873 in the name of Levinson issued April 8, 1986 to AT&T Bell Laboratories, and U.S. patent 4,988,157 in the name of Jackel et al. However, at present, large 1xn cross-point optical switches are often configured to obtain functionality provided by nxm matrix switches. In some instances, reliability and cost are reasons for using this "dated" technology in an nxm configuration.

Thus, today, currently available switching matrices are being manufactured by use of a single stage architecture where both input and output sides of a P x P matrix are comprised of 1 x P rotary switches such as those described by Duck et al. in U.S. patent 4,378,144. Duck et al.

Configuring a plurality of 1 x P rotary switches into a single stage PxP switch has the following limitations:
a) the PxP matrix is not modular and when repairs are required, they must be made to the entire switch;
b) the cost of the switch is largely dependent upon the cost of the number lens-to-fibre units required; and,
c) the maximum reconfiguration time of the component 1xP rotary switch is directly dependent upon the dimension of the matrix.

It is usually preferable that optical switches be efficient, fast and compact. As telecommunication networks have evolved over the years and have become more complex, a need has arisen for a matrix switching system capable of optically coupling any one of a large number of other fibers to another. Furthermore, it is desirable for the switching system to be "non-blocking", i.e. the switching of one input fiber to a output fiber should not interfere with the light transmission of any other input fiber to any other output fiber.

It is an object of this invention, to provide a modularized non-blocking switch that can be configured from 1 x n switches, or switches of other dimensions, that require fewer lens-to-fibre units than the P x P single stage switch.

It is a further object of the invention, to provide a modularized non-blocking switch that is less expensive to manufacture than the P x P single stage switch.

### Summary of the Invention

In accordance with the invention system including a plurality of interconnected functionally identical modules, each replaceable without affecting signals on other modules, for switching P optical signals to P locations in a non-blocking manner, is provided, wherein each module comprises:
M first ports, where M>1;
fewer than M²R second ports, where R>1, for optically coupling to second ports of other modules;
and switching means for switching between the first ports and the second ports, wherein the second ports of a module are optically coupled to second ports of other modules.

In accordance with the invention a system is further provided, of a number 2R of interconnected functionally identical modules for switching P optical signals to P locations in a non-blocking manner, each module comprising:
M first ports, wherein M is at least P/**R**;
M**R** second ports; and switching means for switching between the first ports and the MR second ports, wherein the MR second ports of a module are optically coupled to second ports of other modules.

In accordance with yet another aspect of the invention, a system is provided for switching P optical signals to at least P locations in a non-blocking manner comprising:
a first group of ports for receiving P signals; and
a second group of ports comprising at least P locations;
the first group comprising a number R of modules, each replaceable without affecting optical signals on other modules, each module comprising:
M first ports, where M is at least P/R;
fewer than M²R second ports; and
switching means for switching between the first ports and the second ports, wherein the second ports are optically coupled to the at least P locations; and
the second group comprising one stage 1xP switches coupled to the second ports of the R modules.

### Brief Description of the Drawings

Exemplary embodiments of the invention will now be described in conjunction with the drawings, in which:
Fig. 1 is a prior art schematic diagram of a single stage 8 x 8 matrix switch;
Fig. 2 is a prior art schematic diagram of a 4 x 4 Clos three stage matrix switch;
Fig. 3 is a schematic diagram of a 4 x 4 Skol matrix in accordance with the invention;
Fig. 4a is a graph of optimal values of R, versus matrix dimension;
Fig. 4b is a graph depicting the number of lens fibre units required as a function of matrix dimension for a SDSR and for an SKOL matrix with optimal values of R
Fig. 5a is a detailed diagram of a single module of the switch shown in Fig. 3;
Fig. 5b is a detailed diagram of an alternative embodiment of single module of the switch shown in Fig. 3;
Fig. 5c is a diagram of a one sided optical switch;
Fig. 6 is a diagram of a mixed matrix switch wherein a SKOL matrix switch is combined with a single-sided matrix switch.
Fig. 7 is diagram of a SKOL matrix switch arrangement wherein 2R switches are combined to form a switching system; and,
Fig. 8 is a diagram of a SKOL matrix wherein R MXM switches are utilized in each switching block.

### Detailed Description

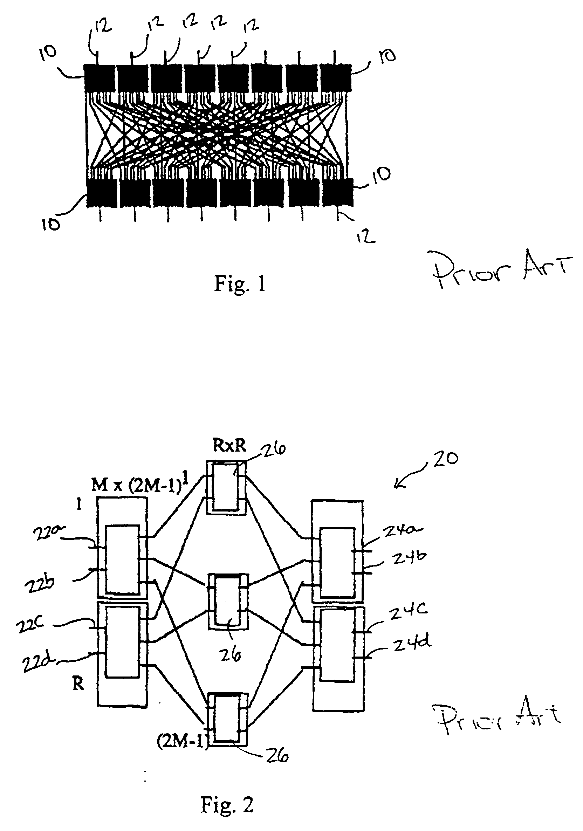

Referring now to Fig. 1, a single stage switched distribution, switched recombination (SDSR) design is shown wherein each port **12** is connected to a 1xP rotary fibre switch, as is described by Duck et al. mentioned above, where P is the overall dimension of the matrix. As is illustrated, optical fibres couple each switch on one side of the matrix to each switch on the other side of the matrix. There are 2P switches including a total of 2P(P+1) lensed fibre units. Therefore the single stage 8 x 8 matrix shown in Fig. 1 includes a total of 16 1x8 rotary switches **10** including 144 lensed fibre units.

Turning now to Fig. 2, a non-blocking multistage matrix switch **20** is shown, hereafter called the "Clos" design. Inputs **22a.. 22d** and outputs **24a.. 24d** are grouped into R groups, of M ports (in this instance, R = 2 and M = 2), wherein each group forms one side of a submatrix of dimension Mx(2M-1). The other side of the submatrix of dimension Mx(2M-1 has one connection to each of the (2M-1) = 3 central submatrices **26** of dimension R x R. The other side of the switch is symmetrical about the R x R central matrices **26**.

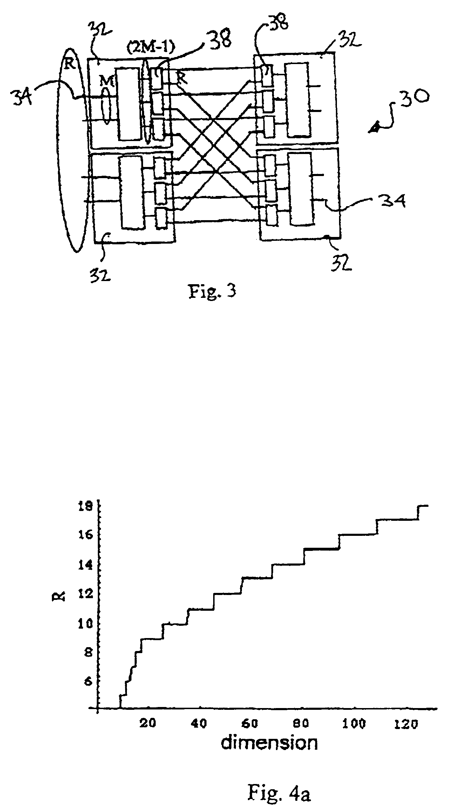

Although the Clos design exemplified by Fig. 2 is useful in reducing the number of cross points required to achieve a non-blocking matrix switch of a particular dimension, wherein crosspoints are analogous to fibre-to-lens units, the Clos design can be improved upon. For example, the 4x4 matrix switch hereafter called the "Skol" matrix shown in Fig. 3 in accordance with this invention provides a modular multistage matrix switch that can be configured in a plurality of different ways. The central interconnection between the two sides of the switch is arranged differently from the Clos design in the present invention.

As shown in Fig. 3 the switch 30 for switching P signals to at least P locations is arranged symmetrically as a set 2R of modules **32**. A number R of modules **32** are interconnected to provide non-blocking connection between external ports **34** of the R modules, termed first ports, and external ports **34** of the remaining R modules,
termed locations. Distribution switches **38**, termed second ports, are optically coupled to second ports **38** of the interconnected modules **32**. Distribution switches **38** comprise at least 2M-1 switches each providing R connections for interconnecting the cooperating modules.

Advantageously, the elimination of the R x R central matrix switches **26** obviates the requirement for different switching modules required by the Clos design, and furthermore provides a more reliable architecture. Failure of one module **32** does not affect ports connected to other modules **32**. Therefore, unlike the Clos design, in Fig. 3, a faulty switch can be replaced without affecting optical signals on other modules **32**. Functionally identical modules **32**, in accordance with the present invention, provide replaceable, non-blocking connection with other modules **32**.

Although like modules **32** are preferred for greater economy of scale, functionally identical modules **32** may be configured asymmetrically in a single system having different numbers of external ports **34**. In an asymmetric system the number of distribution switches or second ports **38** to provide non-blocking functionality is determined by the largest number of external ports **34** on any module **32** of a first group of modules plus the largest number of external ports **34** on any module **32** of a second cooperating group of modules minus 1.

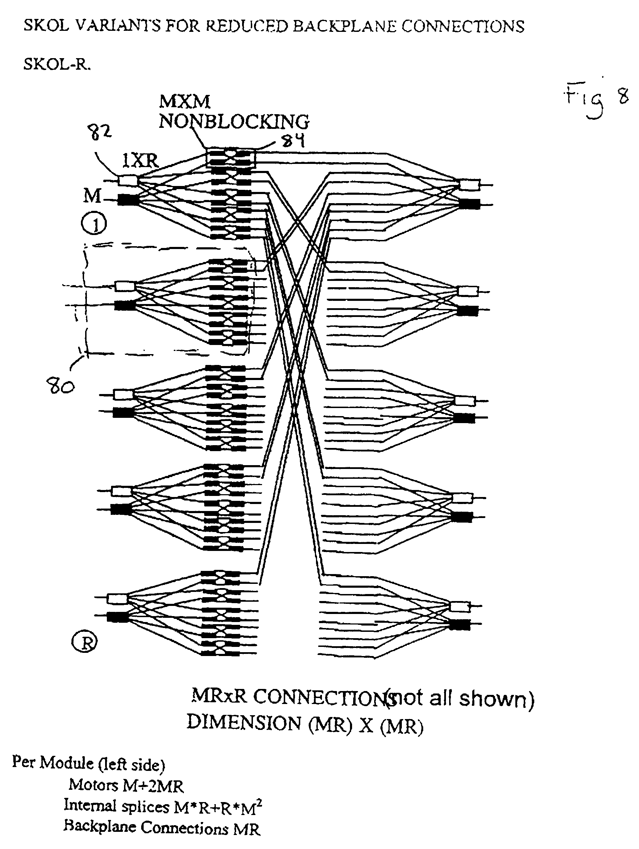

Referring now to Fig. 3, and Fig. 5a each module **32** is comprised of a non-blocking 2 x 3 switch formed of two 1 x 3 switches wherein each of the three output terminals are connected to a 2 x 1 switch. The 2 x 3 non-blocking switch block within module **32** contains within it two 1 x 3 switches and three 2 x 1 switches as is shown in Fig. 5a. In an alternative embodiment shown in Fig. 5b a non-blocking module **32'** includes a blocking switch **33'** which provides the required 2 x 2 function shown in block **33** of Fig. 5a; in this instance three 2 x 2 switches which themselves are allowed to block provide the functionality of the 2 x 1 switches coupled to the 1 x 2 switches.

Advantageously, by providing a single module that can be used in a variety of configurations offers economy of scale.

The interior connections are made in groups between one physical module **32** to another. Conveniently, these connections can be made with ribbon fibre, making assembly somewhat simpler and less prone to error.

Referring now to Fig. 5c, a one sided matrix is shown wherein any input n1.. n4 can be connected to any other input n1.. n4. Movable mirrors **52a** .. **58d** are disposed at cross-points actuated into either in a reflecting position to reflect incident light or in position out of the path of incident light to allow light to pass uninterrupted. In operation, for example, if a signal originating at n2 is destined for n3, one exemplary scenario includes mirrors **52b** and **54c** in a reflecting position while mirrors **52c, 52d, 54d** are be in a non-reflecting position, out of the path of incident light. Alternatively, loop **57** can be used to provide a different path by actuating other mirrors.

In accordance with this invention, the left and right matrices of the Skol matrix shown in Fig. 3, can be reproduced a plurality of times and used as the submatrices of a one sided matrix having the functionality of the matrix described in conjunction with Fig. 5c. Further, it is understood that the Skol matrix provides bi-directional switching capability. Each external port **34** or location may launch or receive signals in either direction, independently of other external ports **34**. Referring again to Fig. 3, in general, a PxP matrix in accordance with this invention, is designed by establishing 2R, the number of modules to be used, wherein each module is a single stage Mx(2M-1) matrix, where M=ceiling[P/R], wherein the term ceiling [P/R] defines an integer greater than P/R. Each single stage matrix is optically coupled to a plurality of distribution switches each of dimension 1xR.

The number of components used in the aforementioned SDSR versus the SKOL architecture are compared in the following table. The matrix dimension is P and the number of submatrix units in the two stage switch is 2R, wherein R inputs and R outputs are provided). The SKOL and Clos designs use the same number of components and the following results apply to both.

| Component | SDSR | SKOL |
|---|---|---|
| lens-fibre assemblies | 2P(P+1) | 2R(M(1+2M-1)+(2M-1)(M+1)+(R+1)(2M-1)) |
| stepping motors | 2P | 2R(M+2M-1+2M-1) |
| splices | P² | R{2M²+(R+2)(2M-1) |

A principle advantage of the SKOL (multistage) design is a reduction in the number of lens-fibre units required; however, this is obtained at the expense of increasing the number of stepper motors required. At present the cost of providing additional lens-fibre units is greater than the cost of providing additional stepper motors, and this trade-off is an advantage. In the future, the 1xN switching function will likely be performed by an integrated optic device having a cost that will be small in comparison to the cost of interconnecting them, and thus the SKOL architecture is likely to be advantageous.

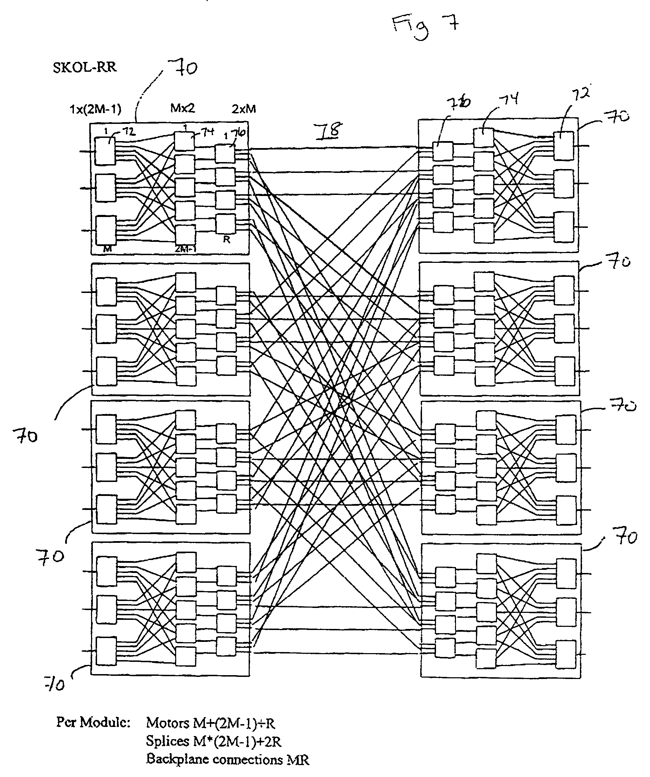

Fig. 4a is a graph depicting optimal values of R for particular matrix dimensions that minimize the number of lens to fibres required.

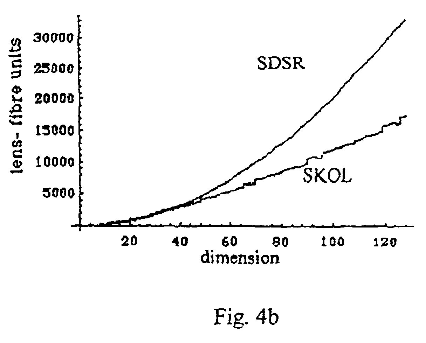

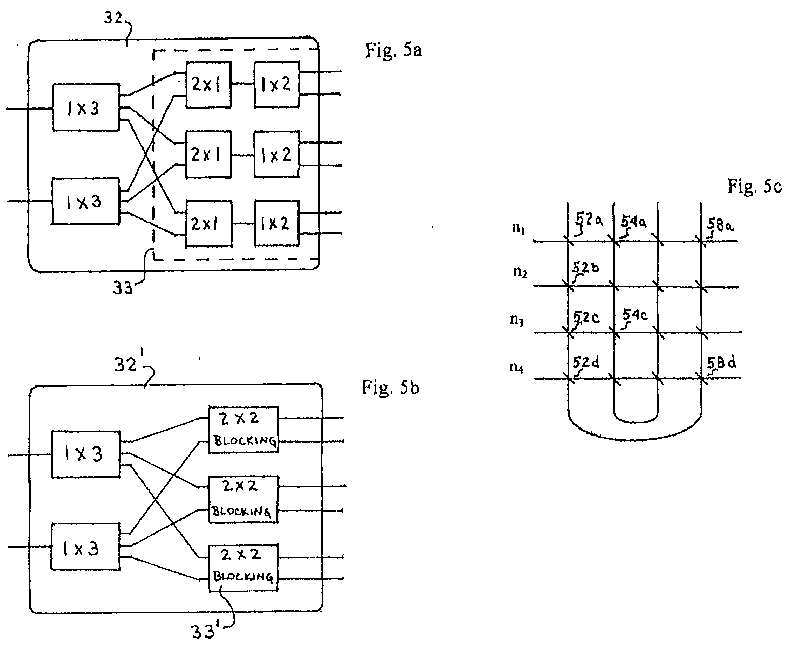

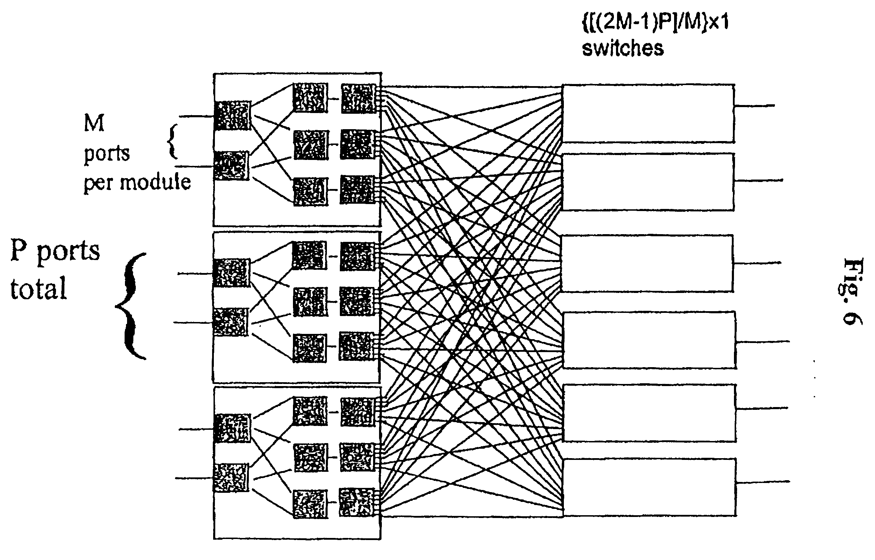

Fig. 4b is a graph depicting the number of lens fibre units required as a function of matrix dimension for a SDSR and for an SKOL matrix with optimal values of R. For matrices of approximately 32 x 32 and greater the two-stage SKOL design is advantageous over the SDSR design. Thus the present invention is preferred for systems wherein P is at least 30.

One disadvantage of the SKOL architecture is that path loss is increased. Each signal must pass through three times more 1xN switches than in the SDSR matrix, wherein switches dominate path loss. Thus, a two-stage design is useful when the loss of the component switches is considerably lower than the requirement on the overall matrix. However, it is possible to provide a matrix switch wherein one side corresponds to the SDSR configuration, but the other side is a SKOL configuration, as shown in Fig. 6. This design is called a "mixed matrix". The input ports on the two-stage side **62** are grouped into R groups of M=P/R ports. These R groups are coupled to MxM switches **66**. The output ports of the MxM switches are coupled to 1xR switches **68**. The number of components required on the two stage side **66** is lower than it would be for a non-mixed SKOL matrix. This is due to the 1xP switches on the single stage side **64** being capable of resolving a blocking issue that two stage SKOL distribution switches cannot resolve. In this instance the optimum value of R is (2P)^{0.5}.

Figs. 7 and 8 show two variants of SKOL switches wherein a greater number of sub-switches **72, 74, 76,** are required to make each switching module **70**, however wherein in switching module provides fewer output optical fibres, thereby forming a system wherein the backplane or interconnection region **78** has fewer optical fibres. In certain instances this is preferred.

Referring now to Fig. 7, an optical switching system is shown wherein 2R switching modules **70**, where R=4 are interconnected in a non-blocking manner. As is shown in this exemplary embodiment the switching module **70** has M first ports and MR second ports. In this example each module **70** includes M 1x(2M-1) switches **72** coupled to 2M-1 Mx2 switches **74**, which are coupled to R 2xM switches **76**.

Fig. 8 shows an embodiment having 10 interconnected modules **80**. Here, similarly to Fig. 7 M first ports are provided and MR second ports are provided. In this embodiment M 1xR switches 82 and R MxM non-blocking switches 84 are used. Conveniently, this a module **80** can be built economically using standard 2x2 switches in combination with 1xR switches.

Of course, numerous other embodiments may be envisaged, without departing from the spirit and scope of the invention.

## Claims

1. A system including a plurality of interconnected functionally identical modules, each replaceable without affecting optical signals on other modules, for switching P optical signals to P locations in a non-blocking manner, each module comprising:
M first ports, where M>1;
fewer than M²R second ports, where R>1, for optically coupling to second ports of other modules;
and switching means for switching between the first ports and the second ports wherein the second ports of a module are optically coupled second ports of other modules.

2. A system as defined in claim 1, comprising a number 2R of interconnected functionally identical modules, wherein M is at least P/R.

3. A system as defined in claim 2 wherein each module comprises at least (2M-1)R second ports.

4. A module for use in a system including a number 2R of interconnected functionally identical modules for switching P optical signals to P locations in a non-blocking manner, the module comprising:
M first ports, wherein M is at least P/R ;
fewer than M²R second ports;
and switching means for switching between the first ports and the second ports, wherein the second ports of a module are for optically coupling to second ports of other modules.

5. A system having 2R switching modules, at least R of the switching modules being functionally identical for switching P optical signals to P locations in a non-blocking manner, said at least R functionally identical modules including a single stage Mx(2M-1) matrix, wherein M = Ceiling [P/R], and wherein each of said at least R switching modules are coupled to 2M-1 distribution switches each of dimension 1xR.

6. A system for switching P optical signals to at least P locations in a non-blocking manner comprising:
a first group of ports for receiving P signals; and
a second group of ports comprising at least P locations;
the first group comprising a number R of modules, each replaceable without affecting optical signals on other modules, each module comprising:
M first ports, where M is at least P/R;
fewer than M²R second ports; and
switching means for switching between the first ports and the second ports, wherein the second ports are optically coupled to the at least P locations; and
the second group comprising one stage 1xP switches coupled to the second ports of the R modules.

7. A system of interconnected functionally identical modules as defined in claim 1, each module comprising MR second ports for optically coupling to second ports of other modules.

8. A system as defined in claim 7 wherein P is less than or equal to MR.

9. A system of interconnected functionally identical modules as defined in claim 7, comprising a number 2R of modules, wherein each module includes R, MxM non-blocking switches.

10. A system as defined in claim 9, wherein each module comprises M, 1xR optical switches.
